# EUROPÄISCHE PATENTANMELDUNG

(11) **EP 0 861 648 A2**
(43) Veröffentlichungstag der Anmeldung: **02.09.1998**
(21) Anmeldenummer: 98102949.9
(22) Anmeldetag: 20.02.1998
(51) Int. Cl.: A61G 5/04

(54) **Muskelkraftbetriebenes Radfahrzeug**

(30) Priorität: 28.02.1997 DE 19708058
(71) Anmelder: Otto Bock Orthopädische Industrie Besitz- und Verwaltungs-Kommanditgesellschaft, 37115 Duderstadt (DE)
(72) Erfinder: Pusch, Martin, Dipl.-Ing., 37115 Duderstadt (DE); Klingebiel, Karl-Heinz, Techniker, 37115 Duderstadt (DE); Brendel, Thomas, Dipl.-Ing., 37115 Duderstadt (DE)
(74) Vertreter: Gramm, Werner, Prof. Dipl.-Ing.

(57) **Zusammenfassung**

Die Erfindung betrifft ein muskelkraftbetriebenes Radfahrzeug, insbesondere Rollstuhl, mit zumindest einem Antriebsrad (1), in das ein getriebeloser elektrischer Außenläufermotor (11, 12, 14) integriert ist, der zwischen einer stationären Radaufnahmeeinrichtung (4) und rotierenden Rad-Funktionseinheiten (5, 6, 7) gekoppelt und zur Abgabe eines zusätzlichen Drehmomentes über eine Steuerung (9) ansteuerbar ist, wobei die Radaufnahmeeinrichtung (4) an ihrem Außenumfang mit dem Stator (11) des Außenläufermotors (11, 12, 14) bestückt ist, während der sich über Kugellager (13) auf der Radaufnahmeeinrichtung (4) abstützende Rotor (12, 14) des Außenläufermotors (11, 12, 14) mit den rotierenden Rad-Funktionseinheiten (5, 6, 7) verbunden ist. Zur Verbesserung seines Aufbaus und seiner Steuerung werden erfindungsgemäß folgende Merkmale vorgeschlagen:
a) die Radaufnahmeeinrichtung (4) umschließt einen konzentrisch um einen Nabenabschnitt (4a) der Radaufnahmeeinrichtung (4) geführten Kreisringraum (8), in dem die genannte Motor-Steuerung (9) sowie ein Akkumulator (10) und/oder eine Batterie angeordnet sind;
b) der Rotor (12, 14) ist am radial außenliegenden Umfang der Radaufnahmeeinrichtung (4) gelagert;
c) das Antriebsrad (1) ist mit einem Griffreif (7) bestückt;
d) die Motor-Steuerung (9) wird von einem Momentensensor (15, 16, 17; 20, 21, 22; 20, 23, 24, 25) zur Erfassung des manuell in den Griffreif (7) eingeleiteten Drehmomentes beaufschlagt.

## Beschreibung

Die Erfindung betrifft ein muskelkraftbetriebenes Radfahrzeug, insbesondere Rollstuhl, mit zumindest einem Antriebsrad, in das ein getriebeloser elektrischer Außenläufermotor integriert ist, der zwischen einer stationären Radaufnahmeeinrichtung und rotierenden Rad-Funktionseinheiten gekoppelt und zur Abgabe eines zusätzlichen Drehmomentes über eine Steuerung ansteuerbar ist, wobei die Radaufnahmeeinrichtung an ihrem Außenumfang mit dem Stator des Außenläufermotors bestückt ist, während der sich über Kugellager auf der Radaufnahmeeinrichtung abstützende Rotor des Außenläufermotors mit den rotierenden Rad-Funktionseinheiten verbunden ist.

Eine derartige Ausführungsform läßt sich der DE 94 22 016 U1 entnehmen, die einen elektrischen Hilfsantrieb einer primär durch Menschen- oder Tierkraft angetriebenen, insbesondere gezogenen oder geschobenen, fahrbaren Vorrichtung offenbart. Der Stator des Außenläufermotors ist auf einem Radkranz einer stationären Radaufnahmeeinrichtung angeordnet, während die rotierenden Rad-Funktionseinheiten unmittelbar auf der Achsnabe der Radaufnahmeeinrichtung drehbar gelagert sind. Dieser drehbare Radteil umfaßt ein den genannten Radkranz umgreifendes, allseitig geschlossenes Gehäuse, das auf seiner Innenseite die Außenläufermagnete trägt und stirnseitig mit einem topfförmigen Außenteil verschraubbar ist, das das genannte Gehäuse stirnseitig sowie auf seinem Außenumfang umschließt und auf seinem Außenumfang einen elastischen Reifen trägt. Als Hilfsantrieb dient ein Drehstromsynchronmotor. Die Radachse ist als langgestreckter Kasten ausgebildet, in dem Batterien untergebracht sind. Die Räder können aber auch mit integrierten Motoren sowie mit jeweils eigenen, integrierten Batterien sowie der zugehörigen Steuerung ausgerüstet sein. Die Räder sind auf Achsstummeln angeordnet, die mittels drehsicherer Steckverbindungen befestigbar sind, die mit Steckverbindungen für in das Rad führende Steuerleitungen, Versorgungsleitungen und dergl. kombiniert sind. Für den Momentensensor sind in erster Linie Dehnmeßstreifen vorgesehen. Dabei ist der Hilfsantrieb in erster Linie für einen von Hand zu ziehenden Golfwagen vorgesehen.

Der Erfindung liegt die Aufgabe zugrunde, das eingangs beschriebene Radfahrzeug insbesondere hinsichtlich seines Aufbaus und seiner Steuerung zu verbessern.

Ausgehend von dem eingangs beschriebenen Radfahrzeug wird diese Aufgabe erfindungsgemäß durch folgende Merkmale gelöst:
a) die Radaufnahmeeinrichtung umschließt einen konzentrisch um einen Nabenabschnitt der Radaufnahmeeinrichtung geführten Kreisringraum, in dem die genannte Motor-Steuerung sowie ein Akkumulator und/oder eine Batterie angeordnet sind;
b) der Rotor ist am radial außenliegenden Umfang der Radaufnahmeeinrichtung gelagert;
c) das Antriebsrad ist mit einem Griffreif bestückt;
d) die Motor-Steuerung wird von einem Momentensensor zur Erfassung des manuell in den Griffreif eingeleiteten Drehmomentes beaufschlagt.

In einer ersten Ausführungsform kann der Momentensensor zwei gleichachsig und mit gleichem Abstand voneinander angeordnete Kreisringscheiben aufweisen, die gleichbreite, von einem achsparallel gerichteten Lichtstrahl beaufschlagte Hell-Dunkel-Sektionen aufweisen und mit dem Griffreif bzw. dem Rotor-Gehäusering und untereinander über eine Torsionsfeder verbunden sind, wobei die Schwächung des Lichtstrahls als analoges Signal die Führungsgröße zur Ansteuerung des Außenläufermotors darstellt.

In einer abgewandelten Ausführungsform ist es zweckmäßig, wenn der Griffreif über Blattfedern mit einem Bolzen in Verbindung steht, der in einem der rotierenden Rad-Funktionseinheiten, vorzugsweise in der Felge drehbar gegenüber einem Drehgeber gelagert ist, der eine Bolzendrehung als Folge eines manuell in den Griffreif eingeleiteten Drehmomentes in ein elektrisches Signal umwandelt, mit dem die Motor-Steuerung beaufschlagt wird.

In einer weiterhin abgewandelten Ausführungsform kann es vorteilhaft sein, wenn der Griffreif über Blattfedern mit einer Welle in Verbindung steht, die in einem der rotierenden Rad-Funktionseinheiten, vorzugsweise in der Felge drehbar gelagert und kinematisch mit einem Hubring so gekoppelt ist, daß eine Verdrehung der Welle als Folge eines manuell in den Griffreif eingeleiteten Drehmomentes den Hubring parallel zur Radachse gegenüber einem auf dem nicht drehenden Teil des Rades, vorzugsweise radial außen an der Radaufnahmeeinrichtung befestigten Sensor verschiebt, der den Hub des Hubringes in ein elektrisches Signal umwandelt, mit dem die Motor-Steuerung beaufschlagt wird.

Das Antriebsrad ist vorzugsweise nur mechanisch über eine Schnellkupplung mit dem Fahrzeuggestell verbunden und benötigt darüberhinaus keine elektrische Verbindung.

Durch die erfindungsgemäß weit radial nach außen gelegte Kugellagerung ergeben sich eine Reduktion der drehenden Massen sowie ein vergrößerter, zur einen Stirnseite offener Einbauraum zur Aufnahme des Akkumulators, der Steuerelektronik und des Momentensensors.

Verwendet wird ein elektrisch kommutierter Elektromotor mit hohem Wirkmoment und kleiner Drehzahl, so daß auf ein Getriebe verzichtet werden kann. Dadurch ergibt sich ein reibungsarmer Freilauf für das Rad. Der Motor wird nur in den Phasen der Beschleunigung bzw. des Bremsens angesteuert. Beim Ausfall der Elektronik bzw. bei leerem Akkumulator verhält sich das Radfahrzeug wie ein herkömmlicher, manuell bewegter Rollstuhl.

Das analoge Signal des Momentensensors ist die Führungsgröße zur Ansteuerung des Motors. Die mikroprozessorbasierte Steuerung mißt über Sensoren die Lage des Rotors relativ zum Stator. Durch elektronische Leistungstreiber wird das Magnetfeld des Stators in der Weise an die Lage des Rotors angepaßt, daß sich ein entsprechendes Moment zum Beschleunigen oder Abbremsen des Rades ergibt. Über geeignete elektronische Verschaltung kann ein Teil der beim Bremsen anfallenden Energie zum Aufladen des Akkumulators benutzt werden. Das Maß der Momentenverstärkung läßt sich über eine Einstellmöglichkeit vom Fahrzeugbenutzer bestimmen.

Verwendet wird vorzugsweise ein Wechselakkumulator, der aus einem Verbund von Nickel/Cadmium- oder Metall/Hydrid-Zellen besteht. Das Akkugehäuse läßt sich somit formschlüssig gestalten; bezogen auf das zur Verfügung stehende Volumen erhält man eine höhere Kapazität. Zur Erleichterung der Handhabung beim Auswechseln des Akkumulators ist für diesen eine Schnellkupplung vorgesehen. Zur Anzeige der Akku-Kapazität ist im Akkumulator vorzugsweise eine entsprechende Anzeige integriert.

Bei der ersten Ausführungsform für den Momentensensor beruht das erfindungsgemäße Meßprinzip auf der Schwächung eines Lichtstrahls. Das zu messende Moment bewirkt eine geringe Verdrehung der über eine verdrehelastische Kupplung miteinander verbundenen Kreisscheiben. Durch Überlagerung der Hell-Dunkel-Sektionen ist die Lichtschwächung innerhalb einer Sektorenbreite proportional zum Verdrehwinkel der Kreisringscheiben zueinander. Das Moment läßt sich also berührungslos abtasten, wobei der Sensor an der feststehenden Elektronik das Moment selbst bei der Drehung des Rades erfaßt. Hierbei ist es nicht erforderlich, elektrische Signale eines rotierenden Ringes über störanfällige Schleifringe zu einer feststehenden Elektronik zu übertragen.

Die beiden anderen Alternativlösungen für den Momentensensor weisen zur Momentenübertragung jeweils eine robuste Kinematik auf und sind daher besonders störunanfällig.

Weitere Vorteile der Erfindung ergeben sich aus der Beschreibung der Ausführungsbeispiele.

In der Zeichnung sind drei als Beispiele dienende Ausführungsformen der Erfindung dargestellt. Es zeigen:
- Figur 1: einen lotrechten Schnitt durch das rechte hintere Antriebsrad eines Rollstuhls;

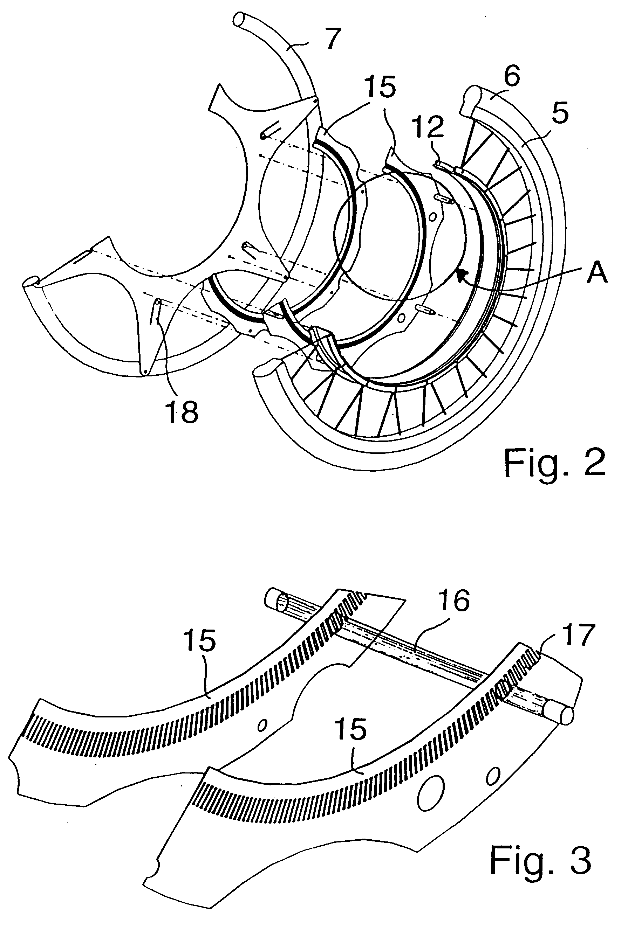

- Figur 2: in gegenüber Figur 1 verkleinertem Maßstab in Explosionsdarstellung die mechanischen Teile eines Momentensensors und
- Figur 3: in perspektivischer Darstellung und in gegenüber Figur 2 vergrößertem Maßstab ein Detail A der Figur 2;
- Figur 4: eine hinsichtlich des Momentensensors abgewandelte Ausführungsform in einer Darstellung gemäß Figur 1 und
- Figur 5: eine hinsichtlich des Momentensensors erneut abgewandelte Ausführungsform in einer Darstellung gemäß Figur 4.

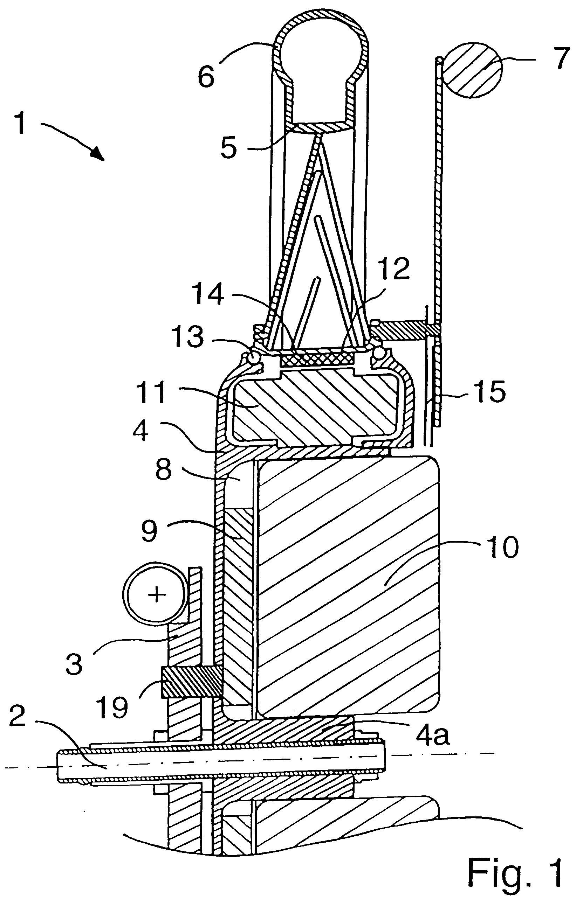

Figur 1 zeigt ein Antriebsrad 1, das ausschließlich mechanisch über eine Schnellkupplung 2 mit einem Fahrzeuggestell 3 eines nicht näher dargestellten Radfahrzeuges, insbesondere eines Rollstuhls verbunden ist. Die stationäre Radaufnahmeeinrichtung 4 ist gegenüber dem Fahrzeuggestell 3 gegen Verdrehen durch eine Verdrehsicherung 19 gesichert. In das Antriebsrad 1 ist ein getriebeloser elektrischer Außenläufermotor integriert, der zwischen einer stationären Radaufnahmeeinrichtung 4 und den rotierenden Funktionseinheiten angeordnet ist, die eine Felge 5 mit aufgezogenem Pneu 6 sowie einen Griffreif 7 zur manuellen Einleitung eines Drehmomentes umfassen.

Die stationäre Radaufnahmeeinrichtung 4 umschließt einen konzentrisch um einen Nabenabschnitt 4a der Radaufnahmeeinrichtung 4 geführten Kreisringraum 8, in dem eine Steuerung 9 für den Außenläufermotor sowie ein Akkumulator 10 als Antriebsquelle für den Außenläufermotor untergebracht sind. Auf der den Kreisringraum 8 radial außen abschließenden Wandung der Radaufnahmeeinrichtung 4 ist der die Ständerwicklungen tragende Stator 11 des Außenläufermotors befestigt. Ferner ist an dem außenliegenden Umfang der Radaufnahmeeinrichtung 4 ein den Stator 11 übergreifender Rotor-Gehäusering 12 gelagert, der sich über ein Kugellager 13 auf Ringstegen der Radaufnahmeeinrichtung 4 abstützt und auf seiner Innenseite Außenläufermagnete 14 trägt, die unter Bildung eines schmalen Luftspalts den Ständerwicklungen des Stators 11 gegenüberliegen.

Der Rotor-Gehäusering 12 trägt auf seiner den Außenläufermagneten 14 gegenüberliegenden Außenseite die mit dem Rotor-Gehäusering 12 rotierenden Rad-Funktionseinheiten 5, 6, 7.

Die Steuerung 9 wird von einem optischen Momentensensor zur Erfassung des manuell in den Griffreif 7 eingeleiteten Drehmomentes beaufschlagt. Dieser Momentensensor weist zwei gleichachsig und mit axialem Abstand voneinander angeordnete Kreisringscheiben 15 auf, die gleich breite, von einem achsparallel gerichteten Lichtstrahl 16 beaufschlagte Hell-Dunkel-Sektionen 17 aufweisen und mit dem Griffreif 7 bzw. dem Rotor-Gehäusering 12 und untereinander über eine Torsionsfeder 18 verbunden sind. Dabei stellt die Schwächung des Lichtstrahls als analoges Signal die Führungsgröße zur Ansteuerung des Außenläufermotors dar.

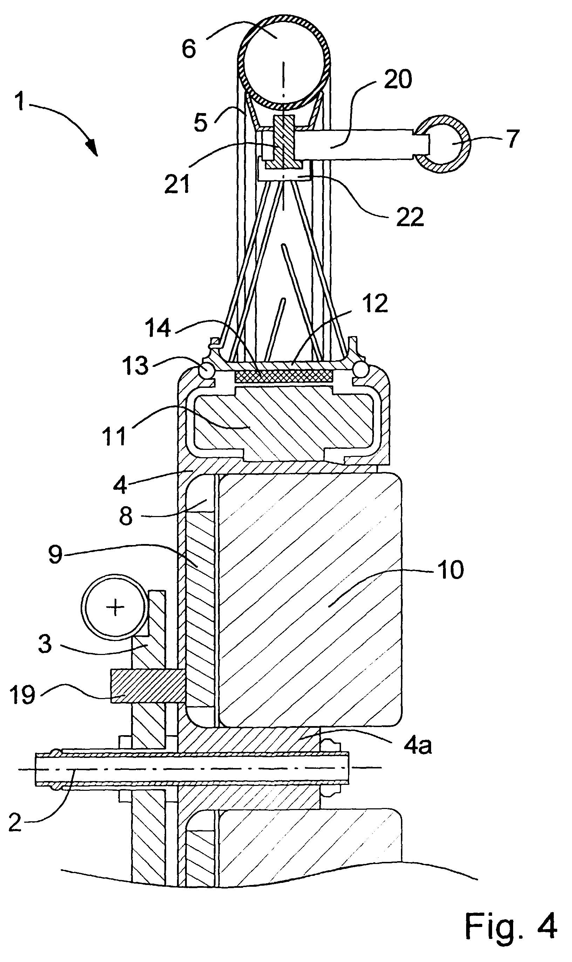

Bei der in Figur 4 dargestellten abgewandelten Ausführungsform ist der Griffreif 7 über Blattfedern 20 mit einem Bolzen 21 verbunden, der in der Felge 5 um eine lotrecht zur Radachse stehenden Bolzenachse drehbar gegenüber einem Drehgeber 22 gelagert ist. Letzterer wandelt eine Bolzendrehung als Folge eines manuell in den Griffreif 7 eingeleiteten Drehmomentes in ein elektrisches Signal um, mit dem die Motor-Steuerung 9 beaufschlagt wird. Dabei ist die Drehung des Bolzens 21 abhängig von der Größe des eingeleiteten Drehmomentes und der Federkonstante der Blattfedern 20. Das vom Drehgeber 22 erzeugte Signal kann optisch oder über Funk von dem rotierenden Teil des Rades auf die Motor-Steuerung 9 im nicht drehenden Teil des Rades übertragen werden.

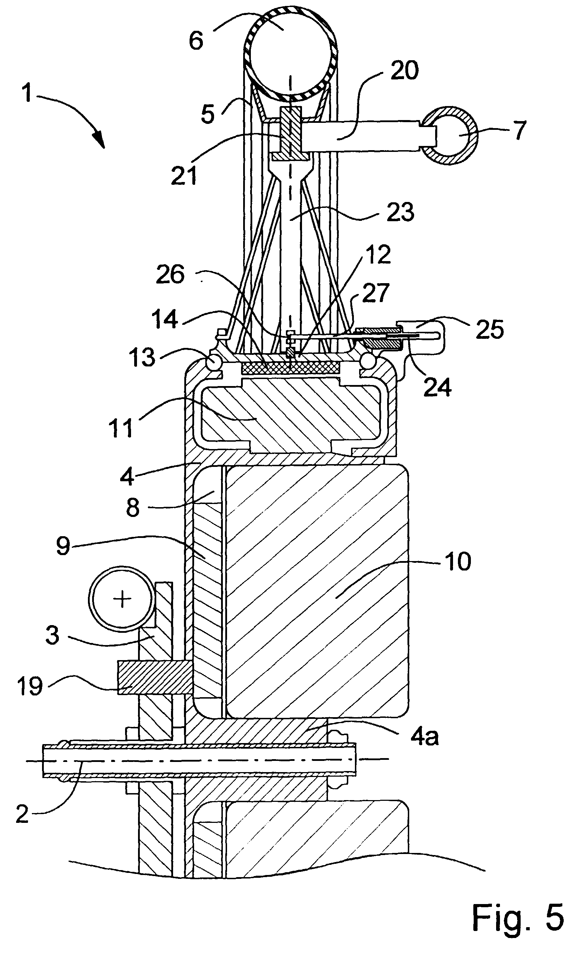

Bei der Ausführungsform gemäß Figur 5 steht der Griffreif 7 über Blattfedern 20 mit einer Welle 23 in Verbindung, die in der Felge 5 drehbar gelagert und kinematisch mit einem Hubring 24 so gekoppelt ist, daß eine Verdrehung der Welle 23 als Folge eines manuell in den Griffreif 7 eingeleiteten Drehmomentes den Hubring 24 parallel zur Radachse verschiebt und zwar gegenüber einem radial außen an der Radaufnahmeeinrichtung 4 befestigten Sensor 25. Letzterer wandelt den Hub des Hubringes 24 in ein elektrisches Signal um, mit dem die Motor-Steuerung 9 beaufschlagt wird.

Die kinematische Verbindung der lotrecht auf der Radachse stehenden Welle 23 mit dem Hubring 24 erfolgt über einen rechtwinklig an der Welle 23 angelenkten Hebel 26, mit dessen äußeren Ende eine Schubstange 27 drehbar gekoppelt ist, die an ihrem anderen Ende mit dem genannten Hubring 24 gekoppelt ist.

## Patentansprüche

1. Muskelkraftbetriebenes Radfahrzeug, insbesondere Rollstuhl, mit zumindest einem Antriebsrad (1), in das ein getriebeloser elektrischer Außenläufermotor (11, 12, 14) integriert ist, der zwischen einer stationären Radaufnahmeeinrichtung (4) und rotierenden Rad-Funktionseinheiten (5, 6, 7) gekoppelt und zur Abgabe eines zusätzlichen Drehmomentes über eine Steuerung (9) ansteuerbar ist, wobei die Radaufnahmeeinrichtung (4) an ihrem Außenumfang mit dem Stator (11) des Außenläufermotors (11, 12, 14) bestückt ist, während der sich über Kugellager (13) auf der Radaufnahmeeinrichtung (4) abstützende Rotor (12, 14) des Außenläufermotors (11, 12, 14) mit den rotierenden Rad-Funktionseinheiten (5, 6, 7) verbunden ist, **gekennzeichnet** durch folgende Merkmale:
a) die Radaufnahmeeinrichtung (4) umschließt einen konzentrisch um einen Nabenabschnitt (4a) der Radaufnahmeeinrichtung (4) geführten Kreisringraum (8), in dem die genannte Motor-Steuerung (9) sowie ein Akkumulator (10) und/oder eine Batterie angeordnet sind;
b) der Rotor (12, 14) ist am radial außenliegenden Umfang der Radaufnahmeeinrichtung (4) gelagert;
c) das Antriebsrad (1) ist mit einem Griffreif (7) bestückt;
d) die Motor-Steuerung (9) wird von einem Momentensensor (15, 16, 17; 20, 21, 22; 20, 23, 24, 25) zur Erfassung des manuell in den Griffreif (7) eingeleiteten Drehmomentes beaufschlagt.

2. Radfahrzeug nach Anspruch 1, **dadurch gekennzeichnet**, daß der Momentensensor (15, 16, 17) zwei gleichachsig und mit gleichem Abstand voneinander angeordnete Kreisringscheiben (15) aufweist, die gleichbreite, von einem achsparallel gerichteten Lichtstrahl (16) beaufschlagte Hell-Dunkel-Sektionen (17) aufweisen und mit dem Griffreif (7) bzw. dem Rotor-Gehäusering (12) und untereinander über eine Torsionsfeder (18) verbunden sind, wobei die Schwächung des Lichtstrahls als analoges Signal die Führungsgröße zur Ansteuerung des Außenläufermotors (11, 12, 14) darstellt. (Figuren 1 bis 3)

3. Radfahrzeug nach Anspruch 1, **dadurch gekennzeichnet**, daß der Griffreif (7) über Blattfedern (20) mit einem Bolzen (21) in Verbindung steht, der in einem der rotierenden RadFunktionseinheiten (5, 6, 7), vorzugsweise in der Felge (5) drehbar gegenüber einem Drehgeber (22) gelagert ist, der eine Bolzendrehung als Folge eines manuell in den Griffreif (7) eingeleiteten Drehmomentes in ein elektrisches Signal umwandelt, mit dem die Motor-Steuerung (9) beaufschlagt wird. (Figur 4)

4. Radfahrzeug nach Anspruch 1, **dadurch gekennzeichnet**, daß der Griffreif (7) über Blattfedern (20) mit einer Welle (23) in Verbindung steht, die in einem der rotierenden Rad-Funktionseinheiten (5, 6, 7), vorzugsweise in der Felge (5) drehbar gelagert und kinematisch mit einem Hubring (24) so gekoppelt ist, daß eine Verdrehung der Welle (23) als Folge eines manuell in den Griffreif (7) eingeleiteten Drehmomentes den Hubring (24) parallel zur Radachse gegenüber einem auf dem nicht drehenden Teil des Rades, vorzugsweise radial außen an der Radaufnahmeeinrichtung (4) befestigten Sensor (25) verschiebt, der den Hub des Hubringes (24) in ein elektrisches Signal umwandelt, mit dem die Motor-Steuerung (9) beaufschlagt wird. (Figur 5)

5. Radfahrzeug nach einem der vorhergehenden Ansprüche, **dadurch gekennzeichnet**, daß das Antriebsrad (1) bzw. seine stationäre Radaufnahmeeinrichtung (4) nur mechanisch über eine Schnellkupplung (2) mit dem Fahrzeuggestell (3) verbunden ist.
